# EUROPEAN PATENT SPECIFICATION

(11) **EP 1 271 494 B1**
(45) Date of publication and mention of the grant of the patent: **31.10.2012**
(21) Application number: 02254228.6
(22) Date of filing: 18.06.2002
(51) Int. Cl.: G11B 7/09

(54) **Optical pickup actuator**
Stellantrieb für optisches Abtastgerät
Actionneur pour appareil de lecture optique

(30) Priority: 19.06.2001 KR 2001034686
(43) Date of publication of application: 02.01.2003
(73) Proprietor: Samsung Electronics Co., Ltd., Suwon-si, Gyeonggi-do, 443-742 (KR)
(72) Inventor: Song, Byung-youn, Paldal-gu, Suwon-si, Gyeonggi-do (KR); Nam, Do-sun, Suwon-si, Gyeonggi-do (KR)
(74) Representative: Robinson, Ian Michael

(56) References cited:
- EP-A2- 1 079 377
- JP-A- 7 065 397
- JP-A- 10 116 431
- JP-A- 11 296 884
- US-A- 5 663 840

## Description

The present invention relates to an optical pickup actuator, and more particularly, to an optical pickup actuator having focus coils, track coils, and tilt coils for driving a bobbin in a focus direction, a track direction, and a tilt direction.

In general, optical pickup actuators are adopted in optical recording/reproducing devices and move in a noncontact way in a radial direction along the recording media mounted on turntables to record/reproduce data on/from the optical disks.

Optical pickups include objective lenses for condensing light emitted from a light source to form a light spot on the optical disks and actuators for controlling the objective lenses in a track direction, and a focus direction, and a tilt direction to accurately position the light spot on the optical disks.

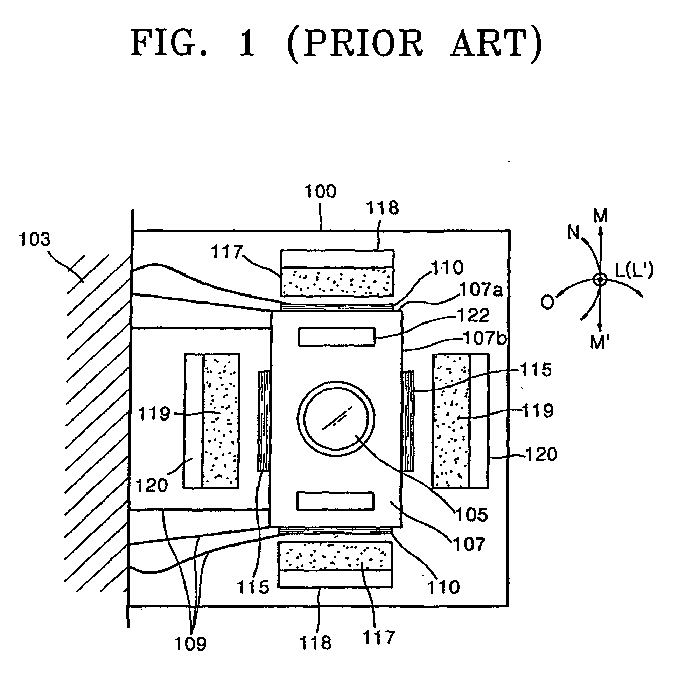

Optical pickup actuators include 2-axis driving actuators for driving the objective lens in the track and focus directions. However, as the numerical aperture of the objective lens increases for highly density recording and the wavelength of the laser beam is reduced, the tilt margin of the optical pickup actuators decreases. To compensate for this, 3-axis or 4-axis driving actuators for driving in the tilt direction as well as the track and focus directions are required. The 3-axis actuator allows driving in the focus, the track, and tilt radial directions. The 4-axis actuator allows driving in the focus, track, tilt radial, and tilt tangential directions. Referring to Figure 1, the focus, track, tilt radial, and tilt tangential directions are represented by L-L', M-M', N, and O, respectively.

Referring to Figure 1, a conventional optical pickup actuator includes a base 100, a holder 103 fixed on the base 100, a bobbin 107 having an objective lens 105, wires 109 for connecting the holder 103 to the bobbin 107, and a magnetic driver (not shown) for driving the bobbin 107 in the track and focus directions or the tilt direction.

The magnetic driver includes focus coils 110 and tilt coils 112 making two pairs with each other, track coils 115, first magnets 117, and second magnets 119. The focus coils 110 and the tilt coils 112 are positioned on the top and bottom sides 107a of the bobbin 107. The track coils 115 are disposed on the left and right sides 107b of the bobbin 107. The first magnets 117 and the second magnets 119 are installed on the base 100 to be spaced apart from the focus coils 110, the tilt coils 112, and the track coils 115. Outer yokes 118 and 120, which are installed on the base 100 and each fixes the first magnets 117 and the second magnets 119, are further included. Inner yokes 122, which are installed on the base 100 and opposite to the first magnets 117 to guide the bobbin 107, are also further included. The outer and inner yokes 118, 120, and 122 induce a magnetic field created by the first and second magnets 117 and 119 in a desired direction.

Wires 109 are soldered on two sides of the bobbin 107 and to the holder 103 to be electrically connected to a circuit unit (not shown), which applies current to the magnetic driver.

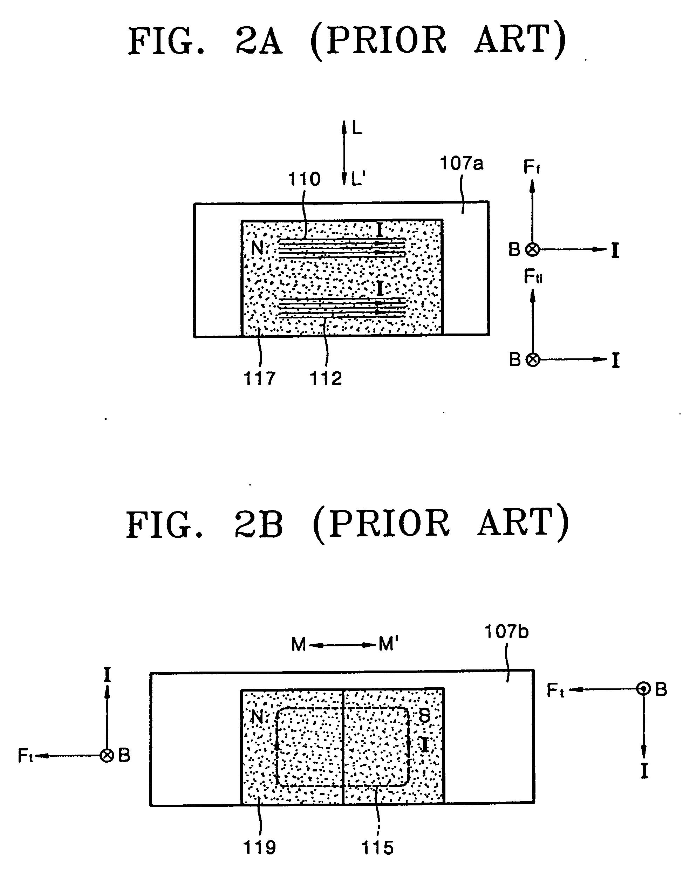

Figure 2A schematically shows the polarity of the first magnets 117 and the directions of currents to observe the relationship of the interaction forces between the focus and tilt coils 110 and 112, and the first magnets 117. Here, the focus coils 110 on two opposite sides 107a of the bobbin 107 receive a force F_{f} according to the Fleming's left-hand law so that the bobbin 107 moves in the focus direction L. The focus coils 110 receive a force in the opposite direction L' if the direction of the applied current is changed.

The tilt coils 112 make pairs with the focus coils 110 on the opposite sides 107a of the bobbin 107 to interact with the first magnets 117. Here, if the tilt coils 112 on the opposite sides 107a of the bobbin 107 are supplied with currents having the same intensity and opposite directions, they receive forces Fₜᵢ with opposite directions. Thus, the driving in the tilt direction, and particularly in a radial tilt direction N is performed.

Figure 2B schematically shows the polarity of the second magnets 117 and the directions of currents to observe the relationship of the interaction forces between the track coils 115 and the second magnets 117. The directions and magnitudes of the forces between magnets and coils are determined based on the Fleming's left-hand law. Thus, the track coils 115 on the lateral sides 107b of the bobbin 107 receive a force Fₜ in the track direction due to the second magnets 119 so that the bobbin 107 moves in the track direction M. Here, if the direction of the applied current is changed, the track coils 115 receive a force in the opposite direction M'.

Wires 109 of the optical pickup actuator generally include six wires for driving the bobbin in the focus, track, and tilt directions. A 4-axis driving actuator may require more wires. However, since an optical pickup actuator is very small, there is not enough space for installing the wires 109 if the four sides of the bobbin 107 are used to install the focus coils, track coils, and tilt coils. Also, if the number of wires increases, it is difficult to adhere the wires to the four sides of the bobbin 107 in such a narrow space. As a result, poor adhesion of the wires increases.

Moreover, if the four sides of the bobbin 107 are all used to dispose coils, the connection between coils becomes complicated. Also, since each of the focus coils, tilt coils, and track coils requires a magnet, the number of parts increases, and thus, the productivity decreases. Also, since the first magnets 117 for the focus coils 110 disposed on the left and right sides of the bobbin 107 may interfere with a spindle motor (not shown) for rotating a disk, the control of the spindle motor can be obstructed.

JP 10 116431 discloses an optical pickup having coils placed on only two sides of a bobbin. A tracking coil is placed opposite a two-polarisation magnet in a tracking direction. A first and second focus coil and a tilt coil are placed opposite different ends of the two-polarisation magnet so that a part of each coil running in the tracking direction overlaps the magnet and a different part running in the tracking direction does not overlap the magnet.

US 5 663 840 discloses an optical pickup including the pre-characterising features of claim 1.

It is an aim of the present invention to provide an optical pickup actuator having focus coils, track coils, and tilt coils for driving a bobbin in a focus direction, a track direction, and a tilt direction, while increasing free spaces on the bobbin.

According to the present invention there is provided an optical pickup actuator as set forth in claim 1. Preferred embodiments are defined in the dependent claims.

For a better understanding of the invention, and to show how embodiments of the same may be carried into effect, reference will now be made, by way of example, to the accompanying diagrammatic drawings in which:
Figure 1 is a plan view of a conventional optical pickup actuator;
Figures 2A and 2B are diagrams showing the relationship between magnets and coils in the conventional optical pickup actuator shown in Figure 1;
Figure 3 is an exploded perspective view of an optical pickup actuator according to a first embodiment of the present invention;
Figure 4 is a plan view of the optical pickup actuator according to the first embodiment of the present invention;
Figure 5 is a diagram showing the relationship of the displacement of magnets and coils in the optical pickup actuator according to the present invention;
Figure 6 is a diagram showing the interaction forces between magnets and fine pattern coils in the optical pickup actuator according to the present invention; and
Figure 7 is an exploded perspective view of an optical pickup actuator according to a second embodiment of the present invention.

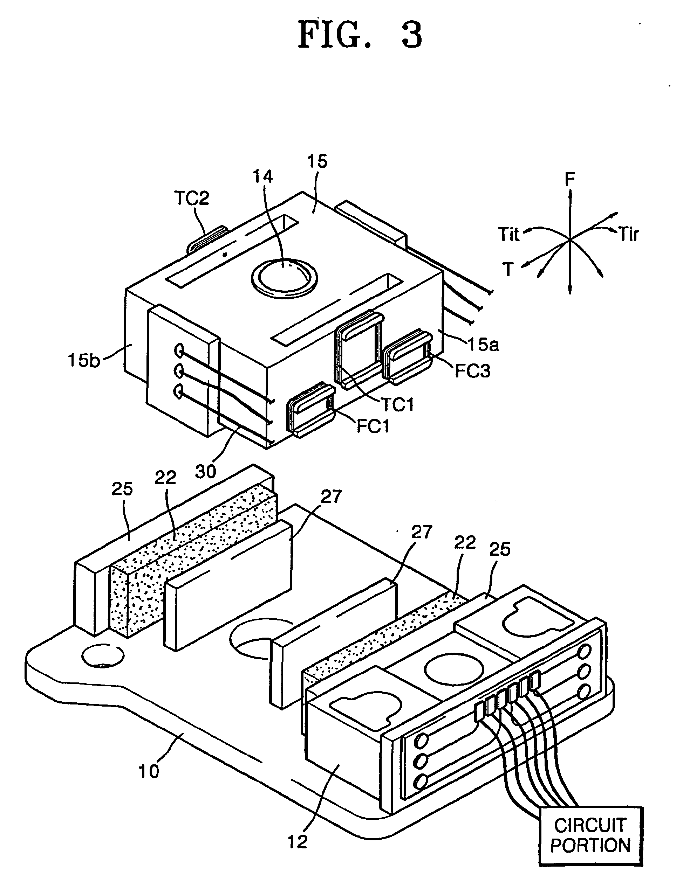

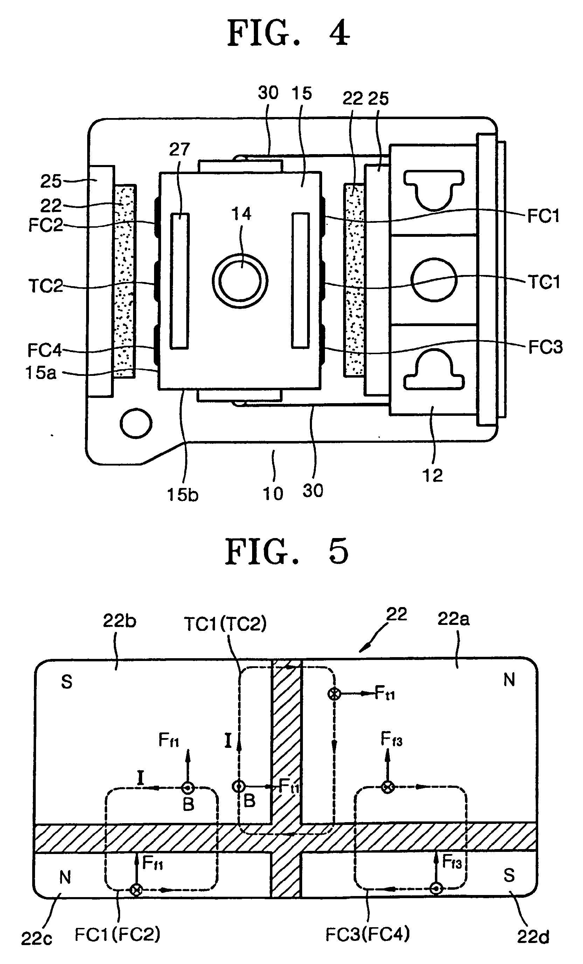

Referring to Figures 3 and 4, an optical pickup actuator according to a first embodiment of the present invention includes a base 10, a holder 12 positioned on one side of the base 10, a bobbin 15 with an objective lens 14, a magnetic driver for driving the bobbin 15 in each of the focus, tilt, and track directions.

The magnetic driver includes at least one set of focus coils for driving the bobbin 15 in the focus direction, at least one set of track coils for the driving in the track direction, at least one set of tilt coils for driving in the tilt direction, and magnet arrangements 22 opposite to the set of focus, track, and tilt coils.

The at least one set of focus coils is composed of the first, second, third, and fourth focus coils, i.e., FC1, FC2, FC3, and FC4, respectively, and the at least one set of track coils is composed of the first and second track coils, i.e., TC1 and TC2, respectively. Here, the first, second, third, and fourth focus coils, FC1, FC2, FC3, and FC4, control the driving in the focus and tilt directions. The magnets 22 are opposite to the first, second, third, and fourth focus coils, FC1, FC2, FC3, and FC4, and the first and second track coils, TC1 and TC2. Here, the first, second, third, and fourth coils, FC1, FC2, FC3, and FC4, the first and second track coils, TC1 and TC2 are all disposed on some opposite sides of the bobbin 15. Supporting units 30, which apply current to the first, second, third, and fourth coils, FC1, FC2, FC3, and FC4 and the first and second track coils, TC1 and TC2 are placed on the other opposite sides of the bobbin 15. The supporting units 30 may be wires or plate springs.

The magnet arrangement 22 has four surface polarizations as shown in Figure 5. For convenience of the description, the four-surface polarization magnet arrangement 22 is divided into the first, second, third, and fourth surface polarizations 22a, 22b, 22c, and 22d. The first surface polarization 22a is a N pole, the second surface polarization 22b is a S pole, the third surface polarization 22c is a N pole, and the fourth surface polarization 22 is a S pole. The first, second, third, and fourth focus coils, FC1, FC2, FC3, and FC4, and the first and second track coils, TC1 and TC2, are disposed to be opposite to the first, second, third, and fourth surface polarizations 22a, 22b, 22c, and 22d, respectively.

The first and second track coils TC1 and TC2 are placed over the first and second surface polarizations 22a and 22b to be opposite to each other. The first, second, third, and fourth focus coils, FC1, FC2, FC3, and FC4, make two pairs with the track coils, TC1 and TC2, on the left and right sides of the bobbin 15 on which the track coils TC1 and TC2 are placed. In other words, the first and second focus coils, FC1 and FC2, is placed over the second and third surface polarizations 22b and 22c to be opposite to each other, and the third and fourth focus coils, FC3 and FC4, is placed over the first and fourth surface polarizations 22a and 22d to be opposite to each other too.

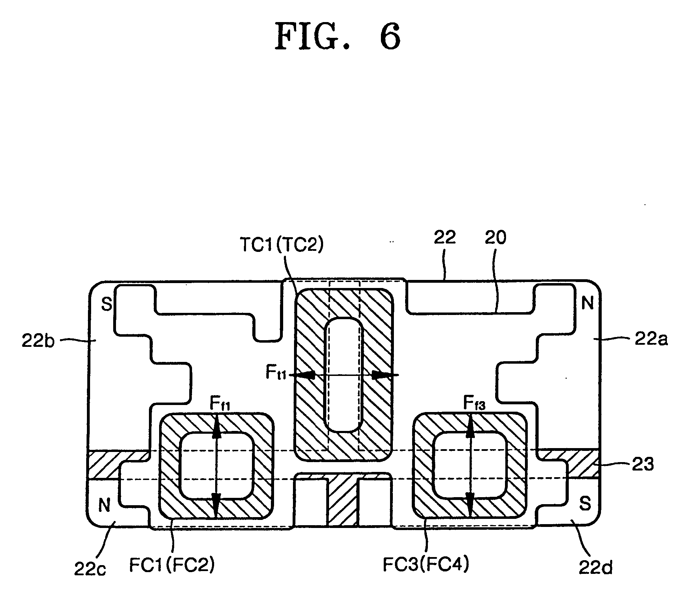

Here, the first, second, third, and fourth focus coils, FC1, FC2, FC3, and FC4, and the first and second track coils, TC1 and TC2, may be winding coils. Also, as shown in Figure 6, at least one of focus, tilt, and track coils may be a fine pattern coil 20. The fine pattern coil 20 is manufactured by patterning a coil on a film and is very useful for installation in a narrow space.

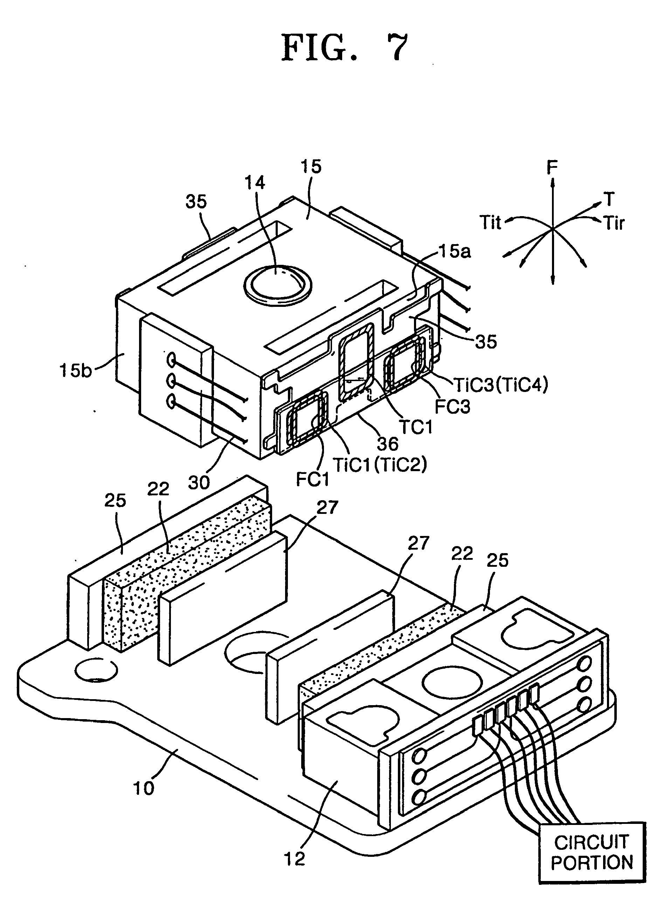

In the above-described embodiment, the tilt coils were shared between the first, second, third, and fourth focus coils, FC1, FC2, FC3, and FC4. In other words, one coil controls the driving in both the focus and tilt directions. However, in a second embodiment, tilt coils may be included apart from the first, second, third, and fourth focus coils, FC1, FC2, FC3, and FC4. As shown in Figure 7, the first, second, third, and fourth tilt coils, TiC1, TiC2, TiC3, and TiC4, are placed to overlap each other on positions similar to the positions of the first, second, third, and fourth focus coils, FC1, FC2, FC3, and FC4. Here, the coils are placed in the form of first and second fine pattern coils 35 and 36.

As described previously, a magnet arrangement having four surface polarizations, 22a, 22b, 22c, and 22d is used as the magnet arrangement 22. The first and second focus coils, FC1 and FC2, are placed over the second and third surface polarizations, 22b and 22c, to be opposite to each other, and the third and fourth focus coils FC3 and FC4 are placed over the first and fourth surface polarizations 22a and 22d to be opposite to each other. The second fine pattern coils 36, which are formed by patterning the tilt coils TiC1, TiC2, TiC3, and TiC4, may be placed in front of or behind the first fine pattern coils 35, which are formed by patterning the first and third focus coils FC1 and FC3, and the first track coils TC1. Each of the two pairs of the tilt coils TiC1, TiC2, TiC3, and TiC4 may be placed on opposite sides 15a of the bobbin 15. In Figure 7, only the first and third tilt coils TiC1 and TiC3 are shown on one of the opposite sides 15a. However, the second and fourth tilt coils TiC2 and TiC4 are disposed on the other side of the opposite sides 15a.

The first and second surface polarizations 22a and 22b, which are opposite to the first and second track coils TC1 and TC2, have wider areas than the third and fourth surface polarizations 22c and 22d in order to secure wider effective areas of the first and second track coils TC1 and TC2. In other words, the first, second, third, and fourth focus coils, FC1, FC2, FC3, and FC4, and the first, second, third, and fourth tilt coils TiC1, TiC2, TiC3, and TiC4 use the first, second, third, and fourth surface polarizations 22a, 22b, 22c, and 22d. However, the first and second track coils TC1 and TC2 use only the first and second surface polarizations 22a and 22b. Thus, the areas of the first, second, third, and fourth surface polarizations 22a, 22b, 22c, and 22d can be controlled to be equally distributed to the first, second, third, and fourth focus coils, FC1, FC2, FC3, and FC4, the first, second, third, and fourth tilt coils, TiC1, TiC2, TiC3, and TiC4, and the first and second track coils, TC1 and TC2.

A neutral region 23 may be between the first, second, third, and fourth surface polarizations 22a, 22b, 22c, and 22d of the magnet 22. The neutral region 23 is positioned at the boundaries of the surface polarizations 22a, 22b, 22c, and 22d to prevent the weakening of the whole magnetic force due to offsets at contact points having different polarities.

Outer yokes 25 and inner yokes 27 may be further included to induce desired distribution of magnetic force lines generated by the magnet arrangement 22.

The operation of the optical pickup actuator having the above-described configuration will be described below.

First, a case where focus coils are shared between the tilt coils will be described. The drives in a focus direction F and a tilt direction T are performed due to the interaction between the first, second, third, and fourth focus coils, FC1, FC2, FC3, and FC4, and the magnet 22.

Driving directions are determined based on directions of applied currents to the first, second, third, and fourth focus coils FC1, FC2, FC3, and FC4. One method is to apply current from the same power source to the first and second focus coils, FC1 and FC2, and to apply current from another power source to the third and fourth focus coils FC3 and FC4. Another method is to apply currents from four different power sources to the first, second, third, and fourth focus coils FC1, FC2, FC3, and FC4, respectively.

In the former method, the first, second, third, and fourth focus coils FC1, FC2, FC3, and FC4, respectively, receive forces in the same directions, which are directed upward or downward, respectively, due to the interaction with the magnetic field of the magnet arrangement 22 if currents having the same directions are applied to the first and second focus coils, FC1 and FC2, and the third and fourth focus coils, FC3 and FC4, respectively. Thus, the driving of the bobbin 15 in the focus direction F can be controlled. In the later method, the first, second, third, and fourth focus coils, FC1, FC2, FC3, and FC4, receive forces in different directions, which are directed upward or downward on the left and right sides of the bobbin 15 if current is applied to the first and second focus coils, FC1 and FC2, in the same direction, and current is applied to the third and fourth focus coils, FC3 and FC4, in a different direction from the first and second focus coils, FC1 and FC2. Thus, the driving of the bobbin 15 in the tilt direction can be controlled. Like this, 3-axis drives in the focus direction F, the track direction T, and tilt radial direction Tir are possible.

When current is applied from the same power source to the first and third focus coils FC1 and FC3, and current is applied from another power source to the second and fourth focus coils FC2 and FC4, the drive in a tilt tangential direction Tit can be performed.

The bobbin 15 moves upward and downward so that the drive in the focus direction F is performed when currents are applied from four different power sources to the first, second, third, and fourth focus coils, FC1, FC2, FC3, and FC4 in the same direction, respectively.

The drive in the tilt radial direction Tir is performed if current is applied from the same power source to the first and second focus coils, FC1 and FC2, respectively, in the same direction, and current is applied from another power source to the third and fourth focus coils, FC3 and FC4, respectively, in a different direction from the first and second focus coils FC1 and FC2. If current is applied from the same power source to the first and third focus coils, FC1 and FC3, respectively, in the same direction, and current is applied from another power source to the second and fourth focus coils, FC2 and FC4, respectively, in a different direction, the drive in the tilt tangential direction Tit is performed.

The first and second track coils TC1 and TC2 interact with the first and second surface polarizations 22a and 22b to move the bobbin 15 in the track direction T. Thus, 4-axis drives in the focus direction F, the track direction T, the tilt radial direction Tir, and the tilt tangential direction Tit are possible.

As shown in Figure 7, the interaction relationship between coils and magnet arrangements will be described when the first, second, third, and fourth focus coils, FC1, FC2, FC3, and FC4, and the first, second, third, and fourth tilt coils, TiC1, TiC2, TiC3, and TiC4, are positioned on the same sides of the bobbin 15.

Current may also be applied from the same power source to the first, second, third, and fourth focus coils FC1, FC2, FC3, and FC4, respectively. In this case, the bobbin 15 may be driven upward or downward according only to the directions of current. The description of the first and second track coils TC1 and TC2 is the same as described previously and thus will be omitted.

Currents can also be applied from four different power sources to the first, second, third, and fourth tilt coils TiC1, TiC2, TiC3, and TiC4 so that the drives in the tilt radial direction Tir and the tilt tangential direction Tit are performed. In other words, if current is applied from the same power source to the first and second tilt coils, TiC1 and TiC2, and current is applied from different power source from the first and second tilt coils TiC1 and TiC2 to the third and fourth tilt coils, TiC3 and TiC4, the drive in the tilt radial direction Tir can be performed. If current is applied from the same power source to the first and third tilt coils, TiC1 and TiC3, and current is applied from different power source from the first and third tilt coils, TiC1 and TiC3, to the second and fourth tilt coils, TiC2 and TiC4, the drive in the tilt tangential direction Tit can be performed.

As described above, an optical pickup actuator according to the present invention has focus coils, track coils, and tilt coils on some opposite sides of a bobbin to secure free spaces on the other opposite sides of the bobbin on which the focus, track, and tilt coils are not disposed. Wires can easily be installed on the other opposite sides of the bobbin, poor adhesion of the wires to the bobbin can be reduced, and thus 3-axis and 4-axis drives can safely be realized.

## Claims

1. An optical pickup actuator comprising:
a base (10);
a bobbin (15) disposed on the base to be moveable due to supporting units (30);
a holder (12) positioned on one side of the base and connected to one ends of the supporting units; and
a magnetic driver having at least four focus coils (FC1-4), at least two track coils (TC1,TC2), at least four tilt coils (FC1-4), and magnet arrangements (22) wherein each of the focus coils, the track coils, and the tilt coils are disposed on opposite sides of the bobbin (15) and each magnet arrangement is disposed on the base; **characterised in that**
each magnet arrangement (22) has four polarisations and is installed to be opposite to the focus coils(FC1-4), the track coils (TC1, TC2), and the tilt coils (FC1-4), such that each track coil (TC1, TC2) is arranged to be opposite two opposed polarisations in a track direction for driving the bobbin (15) in the track direction and each focus coil and each tilt coil is arranged to be opposite two opposed polarisations in a focus direction for driving the bobbin in the focus direction and the tilt direction respectively,
each magnet arrangement (22) has a first surface polarization and a second surface polarization in an upper area and a third surface polarization and a fourth surface polarization in a lower area, the track coil (TC1, TC2) is placed over the first surface polarization and the second surface polarization, the focus coils (FC1-4) comprise a first focus coil (FC-1) which is placed to face both the first and fourth surface polarization and a second focus coil (FC3) which is placed to face both the second and third surface polarizations, and the tilt coils (FC1-4) comprise a first tilt coil which is placed to face both the first and fourth surface polarizations and a second tilt coil (FC4) which is placed to face both the second and third surface polarizations, and
a size of each of the first and second surface polarizations is larger than a size of each of the third and fourth surface polarizations.

2. The optical pickup actuator of claim 1, wherein the focus coils (FC1-4) and the tilt coils (TiCl-4) are common coils.

3. The optical pickup actuator of claims 1, wherein the focus coils (FC1-4) and the tilt coils (TiC1-4) are separated coils.

4. The optical pickup actuator of any preceding claim, wherein at least one of the focus coils, the tilt coils, and the track coils are fine pattern coils.

5. The optical pickup actuator of claim 4, wherein the focus coils (FC1-4) and the tilt coils (TiC1-4) are disposed to overlap each other.

6. The optical pickup actuator of any preceding claim, wherein the supporting units (30) are placed on the other opposite sides of the bobbin different from the opposite sides of the bobbin on which the focus coils, the tilt coils, and the track coils are placed.

7. The optical pickup actuator of any preceding claim, wherein the supporting units (30) are wires or leaf springs.

8. The optical pickup actuator of any preceding claim, further comprising outer yokes (25) on which the magnets (22) are fixed and inner yokes (27) corresponding to the outer yokes (25).

9. The optical pickup actuator of any preceding claim, wherein an objective lens (14) is mounted in the bobbin.

10. The optical pickup actuator of any preceding claim, wherein the track coils comprise a single of track coil at each both side of the bobbin.

11. The optical pickup actuator of any preceding claim, the track coils are placed not to be overlapped on the focus coils and the tilt coils.

## Patentansprüche

1. Optischer Aufnahmestellantrieb, umfassend:
eine Grundplatte (10);
einen Spulenkörper (15), der auf der Grundplatte angeordnet ist, so dass er auf Grund von Stützeinheiten (30) beweglich ist;
einen Halter (12), der auf einer Seite der Grundplatte angeordnet und mit einem Ende der Stützeinheiten verbunden ist; und
einen magnetischen Antrieb, der mindestens vier Fokusspulen (FC1-4), mindestens zwei Bahnspulen (TC1, TC2), mindestens vier Neigungsspulen (TiC1-4) und Magnetanordnungen (22) hat, wobei jede der Fokusspulen, der Bahnspulen und der Neigungsspulen auf entgegengesetzten Seiten des Spulenkörpers (15) angeordnet ist und jede Magnetanordnung auf der Grundplatte angeordnet ist;
**dadurch gekennzeichnet, dass**
jede Magnetanordnung (22) vier Polarisationen hat und so montiert ist, dass sie den Fokusspulen (FC1-4), den Bahnspulen (TC1, TC2) und den Neigungsspulen (TiC1-4) gegenüberliegt, so dass jede Bahnspule (TC1, TC2) gegenüber zwei entgegengesetzten Polarisationen in einer Bahnrichtung angeordnet ist, um den Spulenkörper (15) in Bahnrichtung zu bewegen, und jede Fokusspule und jede Neigungsspule gegenüber zwei entgegengesetzten Polarisationen in einer Fokusrichtung zum Bewegen des Spulenkörpers in Fokusrichtung bzw. in Neigungsrichtung angeordnet ist,
jede Magnetanordnung (22) eine erste Oberflächenpolarisation und eine zweite Oberflächenpolarisation in einem oberen Bereich und eine dritte Oberflächenpolarisation und eine vierte Oberflächenpolarisation in einem unteren Bereich hat, die Bahnspule (TC1, TC2) über der ersten Oberflächenpolarisation und der zweiten Oberflächenpolarisation platziert ist, die Fokusspulen (FC1-4) eine erste Fokusspule (FC-1) umfassen, die so platziert ist, dass sie der ersten und vierten Oberflächenpolarisation zugewandt ist, und eine zweite Fokusspule (FC3), die so platziert ist, dass sie der zweiten und dritten Oberflächenpolarisation zugewandt ist, und die Neigungsspulen (TiC1-4) eine erste Neigungsspule umfassen, die so platziert ist, dass sie der ersten und vierten Oberflächenpolarisation zugewandt ist, und eine zweite Neigungsspule (TiC4) umfassen, die so platziert ist, dass sie der zweiten und dritten Oberflächenpolarisation zugewandt ist, und
eine Größe jeder der ersten und zweiten Oberflächenpolarisationen größer ist als eine Größe jeder der dritten und vierten Oberflächenpolarisationen.

2. Optischer Aufnahmestellantrieb nach Anspruch 1, wobei die Fokusspulen (FC1-4) und die Neigungsspulen (TiC1-4) gemeinsame Spulen sind.

3. Optischer Aufnahmestellantrieb nach Anspruch 1, wobei die Fokusspulen (FC1-4) und die Neigungsspulen (TiC1-4) getrennte Spulen sind.

4. Optischer Aufnahmestellantrieb nach einem der vorherigen Ansprüche, wobei mindestens eine der Fokusspulen, Neigungsspulen und Bahnspulen eine Feinmusterspule ist.

5. Optischer Aufnahmestellantrieb nach Anspruch 4, wobei die Fokusspulen (FC1-4) und die Neigungsspulen (TiC1-4) so angeordnet sind, dass sie sich überlappen.

6. Optischer Aufnahmestellantrieb nach einem der vorherigen Ansprüche, wobei die Stützeinheiten (30) auf den anderen gegenüberliegenden Seiten des Spulenkörpers platziert sind, die nicht die gegenüberliegenden Seiten des Spulenkörpers sind, auf denen die Fokusspulen, Neigungsspulen und Bahnspulen platziert sind.

7. Optischer Aufnahmestellantrieb nach einem der vorherigen Ansprüche, wobei die Stützeinheiten (30) Draht- oder Blattfedern sind.

8. Optischer Aufnahmestellantrieb nach einem der vorherigen Ansprüche, der ferner äußere Joche (25) umfasst, an denen die Magnete (22) befestigt sind, und innere Joche (27), die den äußeren Jochen (25) entsprechen.

9. Optischer Aufnahmestellantrieb nach einem der vorherigen Ansprüche, wobei ein Objektiv (14) im Spulenkörper befestigt ist.

10. Optischer Aufnahmestellantrieb nach einem der vorherigen Ansprüche, wobei die Bahnspulen eine einzelne Bahnspule auf jeder Seite des Spulenkörpers umfassen.

11. Optischer Aufnahmestellantrieb nach einem der vorherigen Ansprüche, wobei die Bahnspulen so platziert sind, dass sie nicht die Fokusspulen und die Neigungsspulen überlappen.

## Revendications

1. Actionneur pour appareil de lecture optique, comprenant :
une base (10) ;
une bobine (15) disposée sur la base de manière à pouvoir être déplacée par l'intermédiaire d'unités de support (30) ;
un dispositif de retenue (12) positionné d'un côté de la base et connecté à une extrémité des unités de support ; et
un dispositif de commande magnétique ayant au moins quatre enroulements de focalisation (FC1-4), au moins deux enroulements de voie (TC1, TC2), au moins quatre enroulements d'inclinaison (TiC1-4) et des agencements d'aimants (22), chacun des enroulements de focalisation, des enroulements de voie et des enroulements d'inclinaison étant disposés sur des côtés opposés de la bobine (15) et chaque agencement d'aimant étant disposé sur la base ;
**caractérisé en ce que**
chaque agencement d'aimant (22) a quatre polarisations et est installé de manière à être en regard des enroulements de focalisation (FC1-4), des enroulements de voie (TC1, TC2) et des enroulements d'inclinaison (TiC1-4), de telle sorte que chaque enroulement de voie (TC1, TC2) est agencé de manière à être en regard de deux polarisations opposées dans une direction de voie afin d'entraîner la bobine (15) dans la direction de la voie et chaque enroulement de focalisation et chaque enroulement d'inclinaison est agencé de manière à être en regard de deux polarisations opposées dans une direction de focalisation pour entraîner la bobine dans la direction de focalisation et dans la direction d'inclinaison, respectivement,
chaque agencement d'aimant (22) a une première polarisation de surface et une deuxième polarisation de surface dans une zone supérieure et une troisième polarisation de surface et une quatrième polarisation de surface dans une zone inférieure, l'enroulement de voie (TC1, TC2) est placé par-dessus la première polarisation de surface et la deuxième polarisation de surface, les enroulements de focalisation (FC1-4) comprennent un premier enroulement de focalisation (FC-1) qui est placé de manière à faire face à la fois à la première et la quatrième polarisation de surface et un deuxième enroulement de focalisation (FC3) qui est placé de manière à faire face à la fois à la deuxième et à la troisième polarisation de surface, et les enroulements d'inclinaison (TiC1-4) comprennent un premier enroulement d'inclinaison qui est placé de manière à faire face à la fois à la première et à la quatrième polarisation de surface, et un deuxième enroulement d'inclinaison (TiC4) qui est placé de manière à faire face à la fois à la deuxième et à la troisième polarisation de surface, et
une taille de chacune des première et deuxième polarisations de surface est plus grande qu'une taille de chacune des troisième et quatrième polarisations de surface.

2. Actionneur pour appareil de lecture optique selon la revendication 1, dans lequel les enroulements de focalisation (FC1-4) et les enroulements d'inclinaison (TiC1-4) sont des enroulements communs.

3. Actionneur pour appareil de lecture optique selon la revendication 1, dans lequel les enroulements de focalisation (FC1-4) et les enroulements d'inclinaison (TiC1-4) sont des enroulements séparés.

4. Actionneur pour appareil de lecture optique selon l'une quelconque des revendications précédentes, dans lequel au moins l'un des enroulements de focalisation, des enroulements d'inclinaison et des enroulements de voie sont des enroulements à motifs fins.

5. Actionneur pour appareil de lecture optique selon la revendication 4, dans lequel les enroulements de focalisation (FC1-4) et les enroulements d'inclinaison (TiC1-4) sont disposés de manière à se chevaucher mutuellement.

6. Actionneur pour appareil de lecture optique selon l'une quelconque des revendications précédentes, dans lequel les unités de support (30) sont placées sur les côtés opposés de la bobine qui sont différents des côtés opposés de la bobine sur lesquels sont placés les enroulements de focalisation, les enroulements d'inclinaison et les enroulements de voie.

7. Actionneur pour appareil de lecture optique selon l'une quelconque des revendications précédentes, dans lequel les unités de support (30) sont des fils ou des ressorts à lames.

8. Actionneur pour appareil de lecture optique selon l'une quelconque des revendications précédentes, comprenant en outre des culasses externes (25) sur lesquelles les aimants (22) sont fixés et des culasses internes (27) correspondant aux culasses externes (25).

9. Actionneur pour appareil de lecture optique selon l'une quelconque des revendications précédentes, dans lequel une lentille d'objectif (14) est montée dans la bobine.

10. Actionneur pour appareil de lecture optique selon l'une quelconque des revendications précédentes, dans lequel les enroulements de voie comprennent un enroulement de voie unique sur chaque côté de la bobine.

11. Actionneur pour appareil de lecture optique selon l'une quelconque des revendications précédentes, dans lequel les enroulements de voie sont placés de manière à ne pas chevaucher les enroulements de focalisation et les enroulements d'inclinaison.
